# FASCICULE DE BREVET EUROPEEN

(11) **EP 0 689 366 B1**
(45) Date de publication et mention de la délivrance du brevet: **25.09.2002**
(21) Numéro de dépôt: 95410049.1
(22) Date de dépôt: 23.05.1995
(51) Int. Cl.: H04Q 1/457, H04Q 1/44

(54) **Circuit de détection de tonalité téléphonique**
Fernsprechtondetektorschaltung
Telephonic tone detection circuit

(30) Priorité: 27.05.1994 FR 9406724
(43) Date de publication de la demande: 27.12.1995
(73) Titulaire: STMicroelectronics S.A., 92120 Montrouge (FR)
(72) Inventeur: Druilhe, François, F-38180 Seyssins (FR)
(74) Mandataire: de Beaumont, Michel

(56) Documents cités:
- EP-A- 0 216 488
- WO-A-81/01623
- GB-A- 2 255 472
- US-A- 4 709 344
- PROCEEDINGS OF THE NATIONAL COMMUNICATIONS FORUM, vol. 31, 10 Octobre 1977 OAK BROOK, ILLINOIS US, pages 267-272, R. CANO ET AL. 'Implementation of a universal receiver-sender for multifrequency signalling'

## Description

La présente invention concerne une structure modulaire programmable pour détecter diverses tonalités téléphoniques qui varient d'une norme de transmission téléphonique à une autre et d'un pays à un autre.

La présente invention vise plus généralement la détection de signaux d'identification dans un signal numérique à l'aide d'un ensemble de modules de traitement qui peuvent être interconnectés de manière programmable par un utilisateur. Un signal d'identification est généralement caractérisé par une amplitude excédant, à une fréquence prédéterminée, un seuil ou l'amplitude d'un autre signal d'identification. Pour détecter un tel signal, les modules de traitement comprennent des filtres programmables, des modules de redressement et d'intégration (estimateurs de puissance), et des comparateurs.

La société Rockwell commercialise un circuit de détection de tonalité comprenant trois fois l'association en série d'un filtre programmable, d'un estimateur de puissance, et d'un comparateur. Ce détecteur de tonalité a seulement deux configurations programmables. Dans une première configuration, chacun des trois filtres reçoit le signal numérique à traiter, ce qui permet de détecter trois tonalités différentes. Dans la deuxième configuration, les trois filtres sont reliés en série afin de pouvoir détecter une tonalité dans une bande de fréquence étroite. Cette structure qui est connue du document GB-A-2 255 472, est loin de pouvoir s'adapter à toutes les situations possibles de détection de tonalité.

Un objet de la présente invention est de prévoir une structure programmable de traitement de signal qui puisse s'adapter à pratiquement toutes les situations du domaine dans lequel la structure programmable est utilisée.

Un autre objet de la présente invention est de réaliser une structure particulièrement simple et facile à programmer.

Pour atteindre ces objets, la présente invention prévoit un circuit de détection de signaux d'identification dans un signal numérique d'entrée qui présente des valeurs arrivant à une fréquence d'échantillonnage, comprenant un ensemble de modules de traitement interconnectés de manière librement programmable par un utilisateur ; une mémoire de signal mise à jour à la fréquence d'échantillonnage du signal d'entrée, contenant les valeurs des signaux de sortie des modules de traitement et du signal d'entrée à des adresses associées ; une mémoire de programmation contenant, à des emplacements associés aux entrées des modules de traitement, les adresses de la mémoire de signal associées aux signaux que l'utilisateur désire connecter auxdites entrées ; et des moyens de commande pour lire les adresses stockées dans la mémoire de programmation, lire les valeurs se trouvant à ces adresses dans la mémoire de signal, et fournir ces valeurs lues aux entrées des modules de traitement dans un ordre correspondant aux emplacements de la mémoire de programmation.

Selon un mode de réalisation de la présente invention, le circuit comprend une mémoire d'entrée dans laquelle les valeurs lues sont stockées à des emplacements associés respectivement aux entrées des modules de traitement.

Selon un mode de réalisation de la présente invention, les modules de traitement comprennent des premiers modules de traitement et des deuxièmes modules de traitement auxquels sont associées respectivement une première mémoire de programmation et une deuxième mémoire de programmation, les moyens de commande étant prévus pour lire les adresses stockées dans les première et deuxième mémoires de programmation à des fréquences différentes, lire les valeurs se trouvant à ces adresses dans la mémoire de signal, et fournir ces valeurs lues aux entrées des premiers modules de traitement et des deuxièmes modules de traitement dans des ordres respectifs correspondant aux emplacements des première et deuxième mémoires de programmation.

Selon un mode de réalisation de la présente invention, le circuit comprend des première et deuxième mémoires d'entrée associées respectivement aux premiers modules de traitement et aux deuxièmes modules de traitement, dans lesquelles les valeurs lues sont stockées à des emplacements associés respectivement aux entrées des premiers modules de traitement et des deuxièmes modules de traitement.

Selon un mode de réalisation de la présente invention, les premiers modules de traitement comprennent des filtres programmables et des modules de redressement et d'intégration, les deuxièmes modules de traitement comprennent des comparateurs, et la mémoire de signal stocke en outre des valeurs seuil que l'utilisateur peut choisir de fournir à des comparateurs.

Selon un mode de réalisation de la présente invention, les opérations des modules de traitement sont effectuées par un ensemble programmable pour effectuer les opérations séquentiellement.

Ces objets, caractéristiques et avantages ainsi que d'autres de la présente invention seront exposés plus en détail dans la description suivante de modes de réalisation particuliers faite à titre non-limitatif à l'aide des figures jointes parmi lesquelles :
la figure 1 représente un exemple d'ensemble de modules de traitement utilisé dans une structure programmable selon l'invention ;
la figure 2 représente schématiquement un mode de réalisation d'une structure programmable selon l'invention ;
les figures 3A à 5B sont destinées à illustrer comment l'invention apporte une solution à un problème pouvant apparaître dans certains cas d'interconnexion des modules de traitement de la figure 1 ;
la figure 6A représente un exemple d'interconnexion de modules de traitement de la structure de l'invention ;
la figure 6B représente les contenus de zones mémoire de la structure de la figure 2 dans le cas de l'exemple de la figure 6A ; et
les figures 7A et 7B représentent des exemples détaillés de modules de traitement.

La présente invention prévoit un ensemble de modules de traitement en nombre suffisant et de diversité suffisante pour pouvoir adapter, par simple programmation, la structure à tous les cas d'utilisation d'un domaine prédéterminé. Pour cela, l'utilisateur doit pouvoir programmer pratiquement n'importe quelle interconnexion des modules.

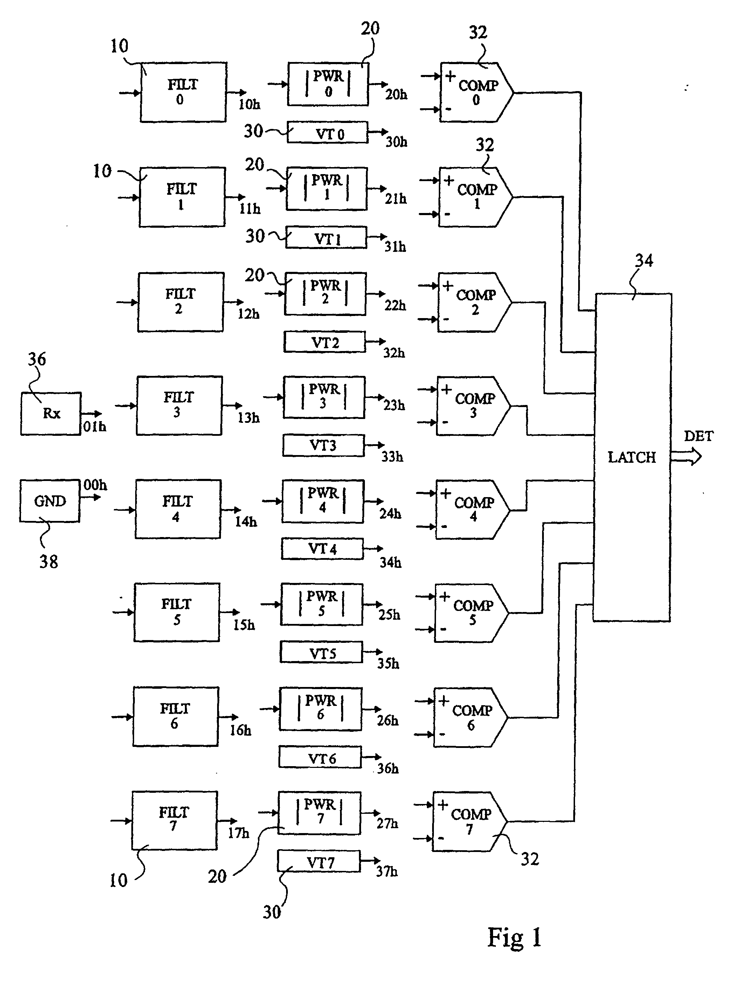

La figure 1 représente un exemple d'ensemble de modules de traitement d'une structure programmable selon l'invention adaptée au domaine des transmissions téléphoniques. Cet ensemble de modules comprend un ensemble de filtres programmables (FILT) 10, un ensemble de modules d'estimation de puissance (PWR) 20, un ensemble de modules 30 fournissant une valeur seuil VT, et un ensemble de comparateurs (COMP) 32. Un exemple de filtre programmable 10 et de module d'estimation de puissance 20 sera décrit ultérieurement. Dans la figure 1, on a représenté huit modules, numérotés de 0 à 7, de chaque type. Les sorties des comparateurs 32, fournissant des signaux de détection de tonalité DET, sont stockées dans un registre (latch) 34. Le signal numérique à traiter Rx est disponible dans un module 36, qui est, par exemple, un registre mis à jour à la fréquence d'échantillonnage de ce signal Rx. Une valeur correspondant au potentiel de masse GND est disponible dans un module 38, qui est, par exemple, constitué d'un ensemble de bits forcés en permanence au potentiel de masse.

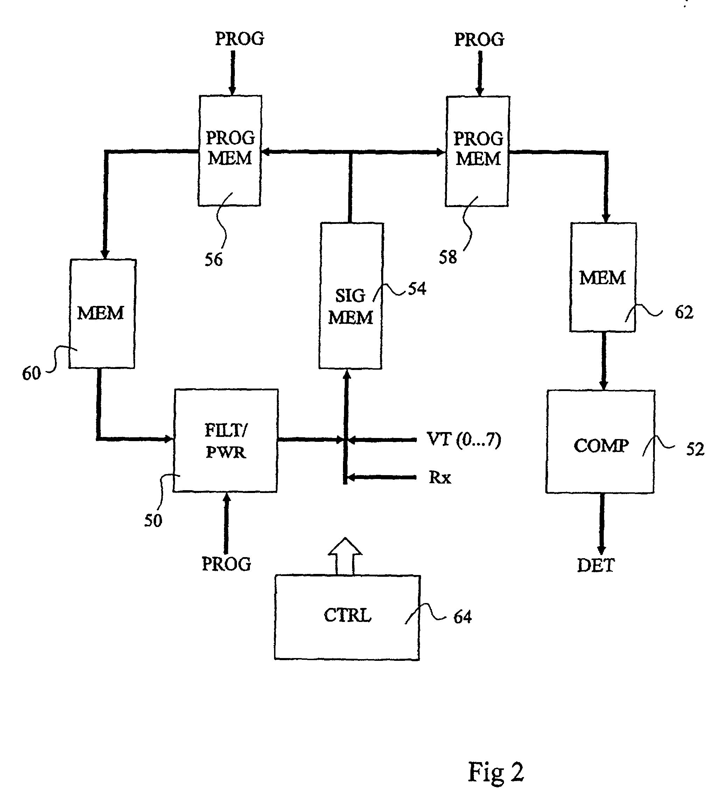

La figure 2 représente de manière schématique une structure programmable selon l'invention. Les filtres 10 et les estimateurs de puissance 20 sont rassemblés dans un bloc 50. Les comparateurs 32 sont rassemblés dans un bloc 52.

Afin de rendre la programmation de la structure particulièrement aisée, chaque signal est affecté, selon l'invention, d'une adresse fixe d'un emplacement d'une mémoire de signal 54. Comme cela est représenté à la figure 1, on affecte, par exemple, l'adresse 00h (où la lettre h signifie que le nombre est hexadécimal) au signal nul GND, l'adresse 01h au signal d'entrée Rx, les adresses 10h à 17h aux sorties des filtres 10, les adresses 20h à 27h aux sorties des estimateurs de puissance 20, et les adresses 30h à 37h aux valeurs seuil VT. On n'affecte pas d'adresses aux sorties des comparateurs 32 car ces sorties ne sont pas connectées à des entrées de modules.

Les emplacements de la mémoire 54 sont mis à jour, à chaque période d'échantillonnage, par les valeurs correspondantes des sorties des modules 50 et du signal d'entrée Rx. Les valeurs seuil VT sont écrites à leurs emplacements respectifs de la mémoire 54, initialement, par exemple à la mise sous tension de la structure.

Les entrées des modules 50 sont associées respectivement à des emplacements fixes d'une mémoire de programmation 56. Dans chaque emplacement de la mémoire 56, un utilisateur écrit (programme) l'adresse du signal qu'il souhaite appliquer à l'entrée de module associée à l'emplacement.

De même, chaque entrée des comparateurs 52 est associée à un emplacement respectif fixe d'une mémoire de programmation 58 dans laquelle l'utilisateur écrit les adresses des signaux à fournir aux comparateurs.

Chaque entrée des modules 50 est également associée à un emplacement respectif fixe d'une mémoire d'entrée 60 dans laquelle on écrit les valeurs à fournir aux modules 50. De même, chaque entrée des comparateurs 52 est associée à un emplacement respectif fixe d'une mémoire d'entrée 62 dans laquelle on écrit les valeurs des signaux à fournir aux comparateurs 52.

Un circuit de commande 64 gère les transferts entre les différentes mémoires, de la manière décrite ci-dessous.

Au début de chaque période d'échantillonnage, les modules 50 effectuent leurs opérations à l'aide des valeurs respectives présentes dans la mémoire 60 et les résultats sont transférés aux adresses respectives dans la mémoire 54. De même, les comparateurs 52 effectuent les comparaisons à partir des valeurs respectives stockées dans la mémoire 62, et valident ou non les bits respectifs du registre 34 (figure 1).

Ensuite, chaque adresse stockée dans la mémoire 56 est examinée et la valeur stockée à cette adresse dans la mémoire 54 est transférée à un emplacement correspondant de la mémoire 60. Les lectures dans la mémoire 56 s'effectuent dans le même ordre que les écritures dans la mémoire 60 de manière à respecter la correspondance entre les emplacements des mémoires 56 et 60 et les entrées des modules 50.

De même, chaque adresse stockée dans la mémoire 58 est examinée et la valeur stockée à cette adresse dans la mémoire 54 est transférée à un emplacement correspondant de la mémoire 62.

Ainsi, à chaque instant d'échantillonnage, les modules 50 et les comparateurs 52 effectuent leurs opérations avec des nouvelles valeurs. Le transfert intermédiaire de la mémoire 54 vers les mémoires 60 et 62 réalise, selon un aspect de l'invention, un retard d'une période d'échantillonnage qui sert à éviter un inconvénient évoqué ci-après.

Les modules sont regroupés en deux blocs distincts 50 et 52 car, dans le présent exemple, les opérations de comparaison (bloc 52) peuvent être effectuées à une cadence moins élevée que celle des opérations de filtrage et d'estimation de puissance (bloc 50). En effet, les résultats des estimateurs de puissance varient peu d'une période d'échantillonnage à une autre. Par exemple, le contenu de la mémoire de programmation 58 est partiellement examiné à chaque période d'échantillonnage, de manière que ce contenu soit examiné en totalité une fois toutes les n périodes d'échantillonnage (n=3, par exemple). Ainsi, la puissance de calcul nécessaire est réduite.

Selon un mode de réalisation de l'invention, les mémoires 60 et 62 sont constituées par des registres d'entrée des modules 50 et 52. La mémoire de signal 54 est constituée de registres de sortie des modules 50, de registres contenant les valeurs seuil VT, et du registre contenant la valeur à traiter du signal Rx. Les modules 50 sont un ensemble de modules fonctionnant en parallèle ou séquentiellement, ou bien un ou deux modules élémentaires reprogrammés pour effectuer séquentiellement les opérations de tous les modules de filtrage et d'estimation de puissance. Selon un autre mode de réalisation, les opérations des modules 50 et 52 sont effectuées de manière logicielle et les mémoires 54 à 62 forment partie d'une même et unique mémoire stockant également des paramètres programmables des filtres et des estimateurs de puissance.

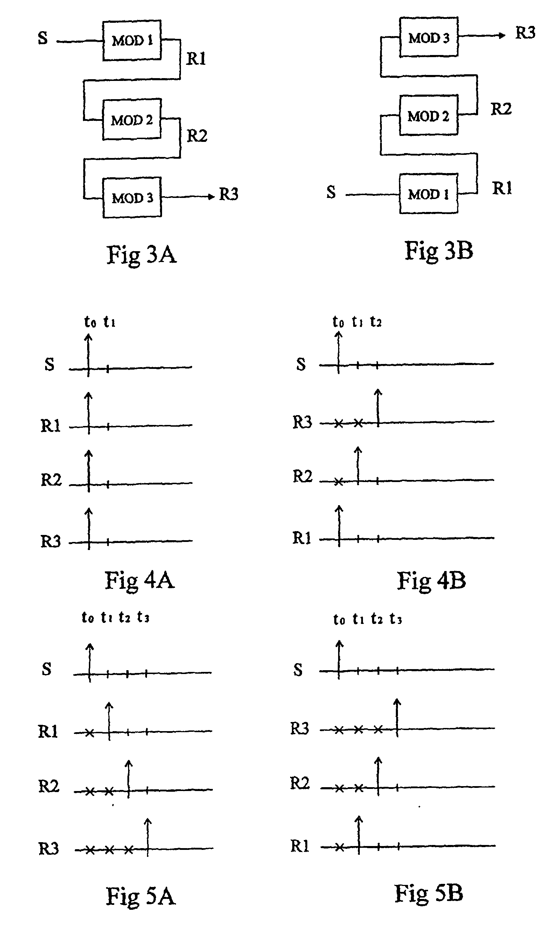

Avec cette structure, l'utilisateur peut programmer de manière aisée (dans les mémoires 56 et 58) toutes les interconnexions possibles entre les modules. Cette liberté peut néanmoins présenter un inconvénient, exposé en relation avec les figures 3A à 5B, que l'invention évite grâce au retard d'une période d'échantillonnage introduit par le transfert intermédiaire dans les mémoires 60 et 62.

Les figures 3A et 3B représentent deux exemples de programmation d'interconnexion entre trois modules MOD1 à MOD3. Un signal S est, dans les deux cas des figures 3A et 3B, traité successivement par les modules MOD1 à MOD3. Les modules MOD1 et MOD2 fournissent des résultats intermédiaires R1 et R2, et le module MOD3 fournit le résultat final R3.

Dans le cas général, les opérations des modules ne sont pas effectuées de manière simultanée. Notamment si ces opérations sont effectuées de manière logicielle, elles sont effectuées séquentiellement. Dans les figures 3A et 3B, on a représenté de haut en bas les modules dans l'ordre d'exécution de leurs opérations. A la figure 3A, les opérations sont effectuées dans l'ordre des modules MOD1 à MOD3, et dans la figure 3B, elles sont effectuées dans l'ordre des modules MOD3 à MOD1.

Les figures 4A et 4B illustrent, pour les configurations des figures 3A et 3B respectivement, un exemple d'évolution des signaux S et R1 à R3 dans l'ordre d'exécution des opérations des modules MOD1 à MOD3. Un échantillon du signal S est fourni à un instant t₀. On suppose, pour simplifier, que chacun des modules MOD1 à MOD3 est tel qu'il transmet à sa sortie la valeur présente à son entrée au moment où l'opération du module est effectuée.

Dans la configuration de la figure 3A, chaque module effectue son opération à un moment où le module précédent a fourni son résultat, c'est-à-dire qu'un module de la figure 3A effectue son opération au moment où son entrée est à la valeur attendue. Comme le représente la figure 4A, l'échantillon du signal d'entrée S est transmis vers la sortie R3 sans retard (sauf celui des opérations des modules, qui est négligé).

Dans la configuration de la figure 3B, l'opération d'un module est effectuée alors que celle du module précédent ne l'a pas encore été. L'entrée du module considéré n'est pas à la valeur attendue, sauf pour le module MOD1. Comme le représente la figure 4B, à l'instant t₀, l'échantillon du signal S est transmis sur la sortie R1. Les opérations des modules MOD3 et MOD2 sont effectuées à partir de l'instant t₀ mais avant celle du module MOD1 ; les sorties R3 et R2 sont à des états quelconques,

A l'instant d'échantillonnage suivant t₁, l'opération du module MOD2 est effectuée alors que son entrée (R1) reçoit l'échantillon du signal S. Cet échantillon est transmis sur la sortie R2. Par contre, l'opération du module MOD3 est effectuée avant celle du module MOD2 ; la sortie R3 est à un état quelconque.

A un instant t₂, l'opération du module MOD3 est effectuée alors que l'échantillon est présent à l'entrée (R2) du module MOD3 ; cet échantillon est transmis sur la sortie R3.

Ces deux cas montrent qu'un signal peut être retardé ou non d'une ou plusieurs périodes d'échantillonnage, selon le sens qu'un utilisateur choisit pour connecter les modules. Ainsi, si le programmateur de la structure ne prend pas de précaution particulière, les divers signaux circulant dans cette structure risquent d'avoir des retards différents, ce qui n'est pas acceptable dans certains cas.

Pour éviter cet inconvénient, et donc pour permettre à l'utilisateur de ne pas devoir surveiller attentivement sa programmation, un aspect de l'invention est d'introduire un retard d'une période d'échantillonnage dans chaque module.

Les figures 5A et 5B illustrent respectivement les comportements obtenus ainsi dans les cas des figures 3A et 3B.

Dans la figure 5A, illustrant le comportement de la configuration de la figure 3A, l'échantillon du signal S est successivement transmis vers les sorties R1 à R3 avec un retard d'une période d'échantillonnage à chaque transmission. Ainsi, la sortie R3 fournit l'échantillon à un instant t₃ suivant l'instant t₀ de trois périodes d'échantillonnage.

A la figure 5B, illustrant le comportement de la configuration de la figure 3B, le même phénomène que celui décrit à l'aide de la figure 4B se produit, mais avec une période d'échantillonnage de retard. Il en résulte que l'échantillon transmis se retrouve sur la sortie R3 à l'instant t₃, comme dans la figure 5A. Ainsi, quel que soit l'ordre de connexion des modules, les signaux sont transmis avec un même retard.

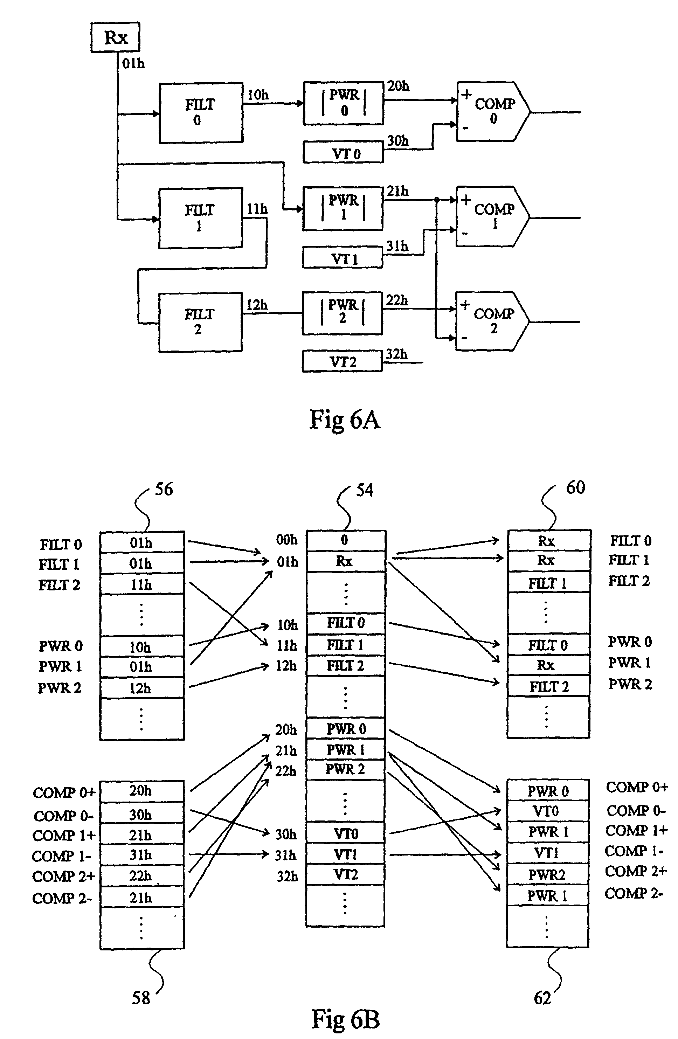

Les figures 6A et 6B illustrent un exemple de programmation de structure et les contenus correspondants des mémoires 54 à 62. Le signal Rx, stocké à l'adresse 01h dans la mémoire 54 est relié aux filtres 0 et 1 ainsi qu'à l'estimateur de puissance 1. Les emplacements de la mémoire 56 associés aux filtres 0 et 1 et à l'estimateur de puissance 1 contiennent l'adresse 01h. Le signal de sortie du filtre 0, stocké à l'adresse 10h dans la mémoire 54, est relié à l'estimateur de puissance 0 ; l'adresse 10h est stockée dans la mémoire 56 à l'emplacement associé à l'estimateur de puissance 0. Le signal de sortie du filtre 1, stocké à l'adresse 11h dans la mémoire 54, est relié au filtre 2 ; l'adresse 11h est stockée dans la mémoire 56 à l'emplacement associé au filtre 2. Le signal de sortie du filtre 2, stocké à l'adresse 12h dans la mémoire 54, est relié à l'estimateur de puissance 2 ; l'emplacement de la mémoire 56 associé à l'estimateur de puissance 2 contient l'adresse 12h.

Les signaux de sortie des estimateurs de puissance 0 et 1, stockés aux adresses 20h et 21h dans la mémoire 54, sont reliés respectivement à des premières entrées (+) des comparateurs 0 et 1, et les valeurs seuil VT0 et VT1, stockées aux adresses 30h et 31h dans la mémoire 54, sont fournies respectivement aux deuxièmes entrées (-) des comparateurs 0 et 1 ; la mémoire 58 stocke les adresses 20h et 21h à des emplacements associés aux premières entrées des comparateurs 0 et 1, et stocke les adresses 30h et 31h à des emplacements associés aux deuxièmes entrées des comparateurs 0 et 1. Les signaux de sortie des estimateurs de puissance 2 et 1 sont fournis respectivement aux deux entrées du comparateur 2. Les adresses 22h et 21h sont stockées dans la mémoire 58 aux emplacements associés aux entrées du comparateur 2.

Dans la figure 6B, les emplacements des mémoires d'entrée 60 et 62 sont associés aux modules dans le même ordre que les emplacements des mémoires de programmation 56 et 58. A chaque échantillon du signal à traiter Rx, les adresses contenues dans les mémoires de programmation 56 et 58 sont lues consécutivement et les valeurs contenues à ces adresses dans la mémoire 54 sont écrites dans le même ordre dans les mémoires d'entrée 60 et 62. Ainsi, par exemple, la valeur Rx contenue à l'adresse 01h de la mémoire 54 est transférée dans la mémoire 60 aux emplacements associés aux filtres 0 et 1 et à l'estimateur de puissance 1.

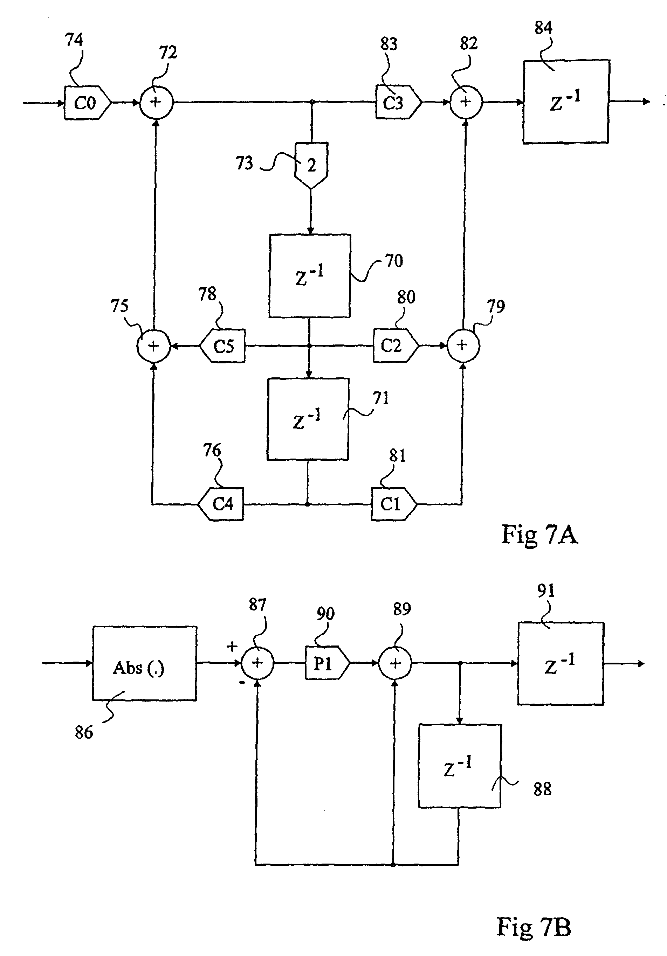

Les figures 7A et 7B représentent des exemples respectifs d'un module de filtrage et d'un module d'estimation de puissance.

Le module de filtrage de la figure 7A est un filtre du deuxième ordre comprenant deux éléments de retard Z⁻¹ 70 et 71 disposés en série. Le module 70 reçoit la sortie d'un additionneur 72 par l'intermédiaire d'un multiplieur par 2 73. Une première entrée de l'additionneur 72 reçoit le signal d'entrée du filtre par l'intermédiaire d'un multiplieur 74 par un coefficient programmable C0. Une deuxième entrée de l'additionneur 72 reçoit la sortie d'un additionneur 75. L'additionneur 75 reçoit sur une première entrée la sortie de l'élément de retard 71 par l'intermédiaire d'un multiplieur 76 par un coefficient programmable C4 et sur une deuxième entrée la sortie de l'élément de retard 70 par l'intermédiaire d'un multiplieur 78 par un coefficient programmable C5. Les sorties des éléments de retard 70 et 71 sont fournies respectivement aux entrées d'un additionneur 79 par l'intermédiaire respectivement d'un multiplieur 80 par un coefficient programmable C2 et d'un multiplieur 81 par un coefficient programmable C1. La sortie de l'additionneur 79 est fournie à un première entrée d'un additionneur 82 qui reçoit sur une deuxième entrée la sortie de l'additionneur 72 par l'intermédiaire d'un multiplieur 83 par un coefficient programmable C3. La sortie du filtre est constituée par la sortie de l'additionneur 82. Un élément de retard 84 relié à oette sortie correspond au retard introduit selon l'invention pour éviter l'inconvénient évoqué en relation avec les figures 3A à 4B.

Le module estimateur de puissance représenté à la figure 7B comprend un élément de calcul de valeur absolue 86 qui reçoit l'entrée du module. Un soustracteur 87 fournit la différence entre la sortie de l'élément 86 et d'un élément de retard 88. Cette différence est fournie à un additionneur 89 par l'intermédiaire d'un multiplieur 90 par un coefficient programmable P1. La sortie de l'additionneur 89, qui constitue la sortie du module, est rebouclée sur la deuxième entrée de l'additionneur 89 par l'élément de retard 88. Un élément de retard 91 est disposé à la sortie du module pour obtenir le retard évitant l'inconvénient susmentionné.

Bien que l'invention a été décrite en relation avec des signaux téléphoniques, elle s'applique à la détection de caractéristiques particulières de tout type de signal.

## Revendications

1. Circuit de détection de signaux d'identification. dans un signal numérique d'entrée (Rx) qui présente des valeurs arrivant à une fréquence d'échantillonnage, comprenant un ensemble de modules de traitement (50) **caractérisé en ce qu'**il comprend en outre :
- une mémoire de signal (54) couplée aux modules de traitement (50), mise à jour à la fréquence d'échantillonnage du signal d'entrée, contenant les valeurs des signaux de sortie des modules de traitement et du signal d'entrée à des adresses associées ;
- une mémoire de programmation (56) couplée à la mémoire de signal (54) et aux modules de traitement (50), librement programmable par un utilisateur, contenant, à des emplacements associés aux entrées des modules de traitement, les adresses de la mémoire de signal associées aux signaux que l'utilisateur désire connecter auxdites entrées ; et
- des moyens de commande (64) pour lire les adresses stockées dans la mémoire de programmation (56), lire les valeurs se trouvant à ces adresses dans la mémoire de signal (54), et fournir les valeurs lues aux entrées des modules de traitement dans un ordre correspondant aux emplacements de la mémoire de programmation.

2. Circuit de détection selon la revendication 1, **caractérisé en ce qu'**il comprend une mémoire d'entrée (60, 62) dans laquelle les valeurs lues sont stockées à des emplacements associés respectivement aux entrées des modules de traitement.

3. Circuit de détection selon la revendication 1, **caractérisé en ce que** les modules de traitement comprennent des premiers modules de traitement (50) et des deuxièmes modules de traitement (52) auxquels sont associés respectivement une première mémoire de programmation (56) et une deuxième mémoire de programmation (58), les moyens de commande (64) étant prévus pour lire les adresses stockées dans les première et deuxième mémoires de programmation à des fréquences différentes, lire les valeurs se trouvant à ces adresses dans la mémoire de signal (54), et fournir ces valeurs lues aux entrées des premiers modules de traitement (50) et des deuxièmes modules de traitement (52) dans des ordres respectifs correspondant aux emplacements des première et deuxième mémoires de programmation.

4. Circuit de détection selon la revendication 3, **caractérisé en ce qu'**il comprend des première (60) et deuxième (62) mémoires d'entrée associées respectivement aux premiers modules de traitement (50) et aux deuxièmes modules de traitement (52), dans lesquelles les valeurs lues sont stockées à des emplacements associés respectivement aux entrées des premiers modules de traitement et des deuxièmes modules de traitement.

5. Circuit de détection selon la revendication 3, **caractérisé en ce que** les premiers modules de traitement (50) comprennent des filtres programmables (10) et des modules de redressement et d'intégration (20), **en ce que** les deuxièmes modules de traitement (52) comprennent des comparateurs (32), et **en ce que** la mémoire de signal stocke en outre des valeurs seuil (VT) que l'utilisateur peut choisir de fournir à des comparateurs.

6. Circuit de détection selon la revendication 1, **caractérisé en ce que** les opérations des modules de traitement sont effectuées par un ensemble programmable pour effectuer les opérations séquentiellement.

## Claims

1. A circuit for detecting identification signals in a digital input signal (Rx) which has values provided at a sampling frequency, including a set of processing units (50); **characterized in that** it further comprises:
- a signal memory (54) coupled to the processing units (50), updated at the sampling frequency of the input signal,. storing the values of the output signals of the processing units and of the input signal at associated addresses;
- a programmation memory (56) coupled to the signal memory (54) and to the processing units (50), freely programmable by a user, storing, at locations associated with the inputs of the processing units, the signal memory addresses associated with the signals that the user desires to connect to said inputs; and
- control means (64) for reading the addresses stored in the programmation memory (56), for reading the values at these addresses in the signal memory (54), and for providing the read values to the inputs of the processing units in an order corresponding to the locations in the programmation memory.

2. The detection circuit of claim 1, **characterized in that** it includes an input memory (60, 62) in which the read values are stored at locations respectively associated with the inputs of the processing units.

3. The detection circuit of claim 1, **characterized in that** the processing units include first processing units (50) and second processing units (52) with which a first programmation memory (56) and a second programmation memory (58) are associated, respectively, the control means (64) being provided for reading the addresses stored in the first and second programmation memories at different frequencies, for reading the values in said addresses in the signal memory (54), and for providing said read values to the inputs of the first processing units (50) and second processing units (52) in respective orders corresponding to the locations of the first and second programmation memories.

4. The detection circuit of claim 3, **characterized in that** it includes first (60) and second (62) input memories associated with the first processing units (50) and second processing units (52), respectively, in which the read values are stored in said memories at locations associated with the inputs of the first processing units and second processing units, respectively.

5. The detection circuit of claim 3, **characterized in that** the first processing units (50) include programmable filters (10) and rectifying and integration units (20), wherein the second processing units (52) include comparators (32), and wherein the signal memory stores in addition threshold values (VT) that can be selected by the user for the comparators.

6. The detection circuit of claim 1, **characterized in that** the operations of the processing units are executed by a programmable unit to sequentially carry out the operations.

## Patentansprüche

1. Schaltung zur Detektion von Identifizierungs-Signalen in einem digitalen Eingangssignal (Rx), welches mit einer Probennahme- (bzw. Sampling-) Frequenz ankommende Werte aufweist, mit einer Gruppe bzw. einem Aggregat von Verarbeitungs-Modulen (50), **dadurch gekennzeichnet daß** die Schaltung des weiteren umfaßt:
- einen mit den Verarbeitungsmodulen verbundenen, jeweils mit der Probennahme- bzw. Samplingfrequenz aktualisierten bzw. fortgeschriebenen Signalspeicher (54), welcher die Werte der Ausgangssignale der Verarbeitungsmodule und des Eingangssignals bei zugeordneten Adressen enthält;
- einen mit dem Signalspeicher (54) und den Verarbeitungsmodulen (50) verbundenen, von einem Benutzer frei programmierbaren Programmierspeicher (56), welcher an den Eingängen der Verarbeitungsmodule zugeordneten Stellen die Adressen des Signalspeichers enthält, welche den Signalen zugeordnet sind, welche der Benutzer mit den genannten Eingängen zu verbinden wünscht; sowie
- Steuermittel (64), um die in dem Programmierspeicher (56) gespeicherten Adressen zu lesen, um die unter diesen Adressen in dem Signalspeicher (54) befindlichen Werte zu lesen, und um die gelesenen Werte den Eingängen der Verarbeitungsmodule in einer den Speicherstellen des Programmierspeichers entsprechenden Reihenfolge zuzuführen.

2. Detektionsschaltung nach Anspruch 1, **dadurch gekennzeichnet, daß** sie einen Eingangsspeicher (60, 62) umfaßt, in welchem die gelesenen Werte jeweils an den Eingängen der Verarbeitungsmodule zugeordneten Stellen gespeichert werden.

3. Detektionsschaltung nach Anspruch 1, **dadurch gekennzeichnet, daß** die Verarbeitungsmodule erste Verarbeitungsmodule (50) und zweite Verarbeitungsmodule (52) umfassen, denen beziehungsweise ein erster Programmierspeicher (56) bzw. ein zweiter Programmierspeicher (58) zugeordnet sind, wobei die Steuermittel (64) vorgesehen sind, um die in den ersten und zweiten Programmierspeichern gespeicherten Adressen mit unterschiedlichen Frequenzen zu lesen, um die unter diesen Adressen in dem Signalspeicher befindlichen Werte zu lesen, und um diese gelesenen Werte den Eingängen der ersten Verarbeitungsmodule (50) und der zweiten Verarbeitungsmodule (52) in jeweils entsprechenden Reihenfolgen entsprechend den Speicherstellen der ersten und zweiten Programmierspeicher zuzuführen.

4. Detektionsschaltung nach Anspruch 3, **dadurch gekennzeichnet, daß** sie erste (60) und zweite (62) Eingangsspeicher umfaßt, die jeweils entsprechend den ersten Verarbeitungsmodulen (50) und den zweiten Verabeitungsmodulen (52) zugeordnet sind, in welchen die gelesenen Werte an Speicherstellen gespeichert werden, die jeweils entsprechend den ersten Verarbitungsmodulen und den zweiten Verarbeitungsmodulen zugeordnet wind.

5. Detektionsschaltung nach Anspruch 3, **dadurch gekennzeichnet, daß** die ersten Verarbeitungsmodule (50) programmierbare Filter (10) und Gleichricht- und Integriermodule (20) umfassen, daß die zweiten Verabeitungsmodule (52) Komparatoren (32) umfassen, und daß der Signalspeicher außerdem Schwellwerte (VT) speichert, welche der Benutzer wahlweise Komparatoren zuführen kann.

6. Detektionsschaltung nach Anspruch 1, **dadurch gekennzeichnet, daß** die Operationen der Verarbeitungsmodule durch ein zur sequentiellen Ausführung der Operationen programmierbares Aggregat ausgeführt werden.
